# EUROPÄISCHE PATENTSCHRIFT

(11) **EP 3 737 964 B1**
(45) Veröffentlichungstag und Bekanntmachung des Hinweises auf die Patenterteilung: **03.09.2025**
(21) Anmeldenummer: 18800610.0
(22) Anmeldetag: 08.11.2018
(51) Int. Cl.: G01S 7/03, G01S 13/931, G01S 13/87, G01S 7/00

(54) **RADARSYSTEM MIT MINDESTENS EINER VERSCHLÜSSELBAREN DATENLEITUNG**
RADAR SYSTEM COMPRISING AT LEAST ONE ENCRYPTABLE DATA LINE
SYSTÈME RADAR COMPRENANT AU MOINS UNE LIGNE DE DONNÉES CHIFFRABLE

(30) Priorität: 11.01.2018 DE 102018200396
(43) Veröffentlichungstag der Anmeldung: 18.11.2020
(73) Patentinhaber: Robert Bosch GmbH, 70442 Stuttgart (DE)
(72) Erfinder: MAYER, Marcel, 89173 Lonsee (DE); SCHOOR, Michael, 70195 Stuttgart (DE)
(86) Internationale Anmeldenummer: PCT/EP2018/080695
(87) Internationale Veröffentlichungsnummer: WO 2019/137656

(56) Entgegenhaltungen:
- WO-A1-2014/095886
- US-A1- 2009 178 486
- US-A1- 2016 018 511
- US-A1- 2016 320 482
- US-A1- 2017 090 015

## Beschreibung

Die Erfindung betrifft ein Radarsystem für ein Fahrzeug, aufweisend eine zentrale Steuereinheit zum Senden von Daten und zum Verarbeiten von empfangenen Daten, mindestens ein von der zentralen Steuereinheit beabstandeter Radarsensorkopf mit mindestens einer Sendeantenne zum Erzeugen und mindestens einer Empfangsantenne zum Empfangen von Radarwellen und aufweisend mindestens eine Datenleitung zwischen der zentralen Steuereinheit und dem mindestens einen Radarsensorkopf.

### Stand der Technik

Die Offenlegungsschrift US 2016/0018511 A1 offenbart ein Radarsystem.

Die Offenlegungsschrift US 2017/0090015 A1 offenbart ein Radarsystem.

Die Offenlegungsschrift US 2016/0320482 A1 offenbart ein Radarsystem.

Die Offenlegungsschrift WO 2014/095886 A1 offenbart ein Verfahren zum Feststellen der Authentizität eines Ultraschallsensors eines Kraftfahrzeugs.

Die Offenlegungsschrift US 2009/0178486 A1 offenbart eine Detektionsvorrichtung eines Fahrzeugs.

Bei Fahrzeuge mit einem hohem Level an Fahrerassistenzfunktionen oder automatisierten Fahrfunktion werden immer mehr Radarsensoren verbaut. Durch eine höhere Anzahl an Radarsensoren wird eine höhere Leistungsfähigkeit der automatisierten oder teilautomatisierten Fall Funktionen gegenüber einzelnen Radarsensoren angestrebt. Bisherige Lösungen in diesem Bereich bestehen aus Radarsensoren, welche sensorintern umfangreiche Datenverarbeitung der empfangenen Radarwellen durchführen. Somit können die Radarsensoren Daten auf Objekt- oder Ortungsebene für eine weitere Auswertung durch das Fahrzeug liefern. Hierdurch kann die an das Fahrzeug übertragene Datenmenge reduziert werden, jedoch müssen die jeweiligen Radarsensoren eine höhere Rechenleistung und einen größeren Speicher aufweisen.

Nachteilig ist hierbei, dass die Rechenleistung und die Speichergröße verhältnismäßig ungünstig in Bezug auf gesteigerte Leistungsfähigkeit skalierbar sind. Dies resultiert insbesondere daraus, dass ausgehend von einer definierten Anforderung an die Leistungsfähigkeit die Mikrocontroller-Technologie für die notwendigen Verarbeitungsschritte der empfangenen Radarwellen nicht mehr ausreicht. Daher müssen zum Steigern der Leistungsfähigkeit die notwendigen Berechnungen und Analysen sensorintern im Rahmen von Mikroprozessortechnologien durchgeführt werden. Dies kann sich nachteilig auf einen Preis, eine Größe und auf Verlustleistungen eines Radarsensors auswirken.

Darüber hinaus bestehen insbesondere für hochautomatisierte Fahrzeuge definierte Anforderung an eine Manipulationssicherheit und eine Verfügbarkeit bzw. Zuverlässigkeit der für die Fahrfunktionen relevanten Sensorik.

### Offenbarung der Erfindung

Die der Erfindung zugrunde liegende Aufgabe kann darin gesehen werden, ein Radarsystem für Fahrzeuge vorzuschlagen, welches preiswert und flexibel in seiner Leistungsfähigkeit skalierbar und gegen Eingriffe Dritter geschützt ist.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Radarsystem für ein Fahrzeug bereitgestellt. Das Radarsystem weist mindestens eine zentrale Steuereinheit zum Senden von Daten und zum Verarbeiten von empfangenen Daten auf. Des Weiteren weist das Radarsystem mindestens einen von der zentralen Steuereinheit beanstandeten Radarsensorkopf mit mindestens einer Sendeantenne zum Erzeugen von Radarwellen und mindestens einer Empfangsantenne zum Empfangen von Radarwellen auf. Zum Übertragen von Daten weist das Radarsystem mindestens eine Datenleitung zwischen der mindestens einen zentralen Steuereinheit und dem mindestens einen Radarsensorkopf auf. Erfindungsgemäß weist die mindestens eine Datenleitung mindestens eine Sicherheitseinheit zum Verschlüsseln, Entschlüsseln und/oder Signieren von Messdaten oder von Steuerbefehlen auf.

Unter dem Aspekt, dass mehrere Radarsensoren in einem Fahrzeug eingesetzt werden ist es vorteilhaft die benötigte Rechenleistung in mindestens einem zentralen Steuergerät zu konzentrieren. Die jeweiligen Radarsensoren können somit als kompakte und preiswerte Radarsensorköpfe ohne signifikante Verlustleistungen gestaltet sein. Dadurch kann insgesamt ein besseres Preis-Leistungs-Verhältnis erzielt und eine höhere Leistungsfähigkeit des Radarsystems realisiert werden.

Bei dem erfindungsgemäßen Radarsystem weist der mindestens eine Radarsensorkopf Komponenten zum Erzeugen und Senden von Radarwellen sowie Komponenten zum Empfangen und Verarbeiten von empfangenen Radarwellen auf. Die Verarbeitung der empfangenen Radarwellen beschränkt sich hierbei auf ein möglichst geringes Maß bzw. findet mit einem möglichst geringen Aufwand statt. Insbesondere können die Messdaten der empfangenen Radarwellen durch einen Analog-Digital-Wandler digitalisiert und anschließend mit einer hohen Bandbreite an die mindestens eine zentrale Steuereinheit übertragen werden. Die Weiterverarbeitung der digitalisierten Messdaten von dem mindestens einen Radarsensorkopf kann anschließend in der mindestens einen zentralen Steuereinheit erfolgen.

Hierdurch können die Kosten für die jeweiligen Radarsensorköpfe reduziert werden, da eine geringere Rechenleistung in den einzelnen Radarsensorköpfen notwendig ist. Darüber hinaus kann eine geringere Verlustleistung in den jeweiligen Radarsensorköpfen aufgrund der geringeren Anzahl an Verarbeitungsschritten anfallen. Zwar steigt der Rechenaufwand in der mindestens einen zentralen Steuereinheit, jedoch kann hierbei die Rechenleistung im Vergleich zu den anfallenden Kosten leichter bzw. mit einem geringeren Aufwands skaliert werden. Bei einer Gesamtbetrachtung des Radarsystems kann das erfindungsgemäße Radarsystem preiswert und flexibel gegenüber bisherigen Lösungen erweitert und skaliert werden. Des Weiteren können durch die höhere Rechenleistung der mindestens einen zentralen Steuereinheit komplexere und leistungsfähigere Algorithmen zum Verarbeiten der empfangenen Radarwellen eingesetzt werden.

Durch die mindestens eine Sicherheitseinheit können die von dem mindestens einen Radarsensorkopf ermittelten Messdaten verschlüsselt und durch die mindestens eine Datenleitung an die mindestens eine Steuereinheit übertragen werden. Die mindestens eine Steuereinheit kann die verschlüsselten Daten entschlüsseln bzw. dekodieren und weiterverarbeiten. Alternativ oder zusätzlich können die Messdaten mit einer Signatur durch die mindestens eine Sicherheitseinheit versehen werden. Hierdurch können die übermittelten Messdaten beispielsweise mit eindeutigen Identifizierungsnummern markiert und an die mindestens eine zentrale Steuereinheit übertragen werden. Parallel zu den Messdaten können auch Steuerbefehle vor Zugriffen Dritter durch ein Verschlüsselungsverfahren gesichert werden.

Hierdurch kann das gesamte Radarsystem vor Zugriffen, Manipulationen oder Spionage geschützt werden. Vorzugsweise kann die sie die mindestens eine Sicherheitseinheit bidirektional die gesendeten oder ankommenden Messdaten oder Steuerbefehle verschlüsseln bzw. entschlüsseln. Darüber hinaus kann durch diese Sicherung eine gesteigerte auf Anforderung für autonome Fahrzeuge angepasste Zuverlässigkeit des Radarsystems gewährleistet werden.

Die Verschlüsselung kann beispielsweise verwendet werden, um tatsächlich die übertragenen Messdaten "unleserlich" zu machen, oder auch als MAC (Message Authentication Code) in einem elektronischen Baustein zu signieren.

Die mindestens eine Datenleitung ist vorzugsweise als eine sogenannte High Speed Schnittstelle ausgeführt. Die mindestens eine Datenleitung kann als eine serielle Datenübertragung mit einer Taktrückgewinnung ausgeführt sein.

Beim erfindungsgemäßen Radarsystem sind die von der mindestens einen Empfangsantenne des mindestens einen Radarsensorkopfes empfangenen Radarwellen durch einen Analog-Digital-Wandler in digitale Messdaten wandelbar und mit mindestens einer Zeitinformation markierbar. Hierdurch können die empfangenen Radarwellen bzw. Messdaten in ein digitales Format umgewandelt und somit einfacher weiterverarbeitet werden. Vorteilhafterweise können die in ein digitales Format umgewandelten Messdaten mit einem Zeitstempel versehen werden. Es kann beispielsweise jedes aufgezeichnete Spektrum einen eigenen Zeitstempel erhalten.

Beim erfindungsgemäßen Radarsystem weist der mindestens eine Radarsensorkopf eine dem Analog-Digital-Wandler nachgeschaltete und der mindestens einen Datenleitung vorgeschaltete Analyseeinheit zum Durchführen einer schnellen Fourier-Transformation auf. Mit zunehmender Verbesserung von elektrotechnischen Herstellungsverfahren ist es möglich, in einen Hochfrequenzbaustein wie beispielsweise einen so genannten Monolithic Microwave Integrated Circuit (MMIC) zusätzlich eine erste Verarbeitungsstufe zu integrieren. Dies kann vorzugsweise eine Analyseeinheit zum Durchführen einer Fourier-Analyse sein. Beispielsweise kann die Analyseeinheit eine Range FFT der digitalisierten Messdaten durchführen. Abhängig von den verwendeten Modulationsverfahren können auch andere Fourier-Transformationen verwendet werden. Diese erste Verarbeitungsstufe ist in der Regel preiswert in die bestehenden Komponenten eines Radarsensorkopfes integrierbar, da die benötigte Fläche im Hochfrequenzbaustein sehr gering ist und ein geringer Speicherbedarf besteht. Somit kann bei der Herstellung des entsprechenden Hochfrequenzbausteins die verwendete Siliziumfläche üblicherweise gleich bleiben. Somit werden die Abtastwerte bzw. empfangenen Radarwellen nach dem Digitalisieren nicht direkt übertragen, sondern einer ersten Verarbeitungsstufe unterzogen. Die schnelle Fourier-Transformation kann beispielsweise auf den jeweiligen Verwendungszweck angepasst sein. Beispielsweise kann die schnelle Fourier-Transformation nur bis zur Anti Aliasing Filter Grenze durchführbar sein.

Nach einem weiteren Ausführungsbeispiel des Radarsystems ist zum Verschlüsseln und/oder Entschlüsseln von Messdaten oder Steuerbefehlen eine Blockverschlüsselung oder Blockentschlüsselung durch die mindestens eine Sicherheitseinheit ausführbar. Bei einem Radarsensorkopfkann es vorteilhaft sein, ein Verschlüsselungsverfahren mit Blockverschlüsselung zu verwenden, da die Messdaten auch Blockweise vorliegen. Dies kann für unterschiedliche Partitionierungen, Verarbeitungsschritte oder Verfahren des Radarsystems sinnvoll sein, wenn die Daten beispielsweise blockweise vorliegen. Dies können beispielsweise Daten einer Frequenzrampe oder ein OFDM-Symbol sein. Beispielsweise kann eine AES (Advanced Encryption Standard) Blockverschlüsselung hierfür verwendet werden. Durch die Verschlüsselung können wichtige Sicherheitsanforderungen, insbesondere für automatisiertes oder teilautomatisierten Fahren, erfüllt werden.

Gemäß einem weiteren Ausführungsbeispiel des Radarsystems weist die mindestens eine Datenleitung zwei endseitig angeordnete Sicherheitseinheiten auf. Insbesondere bei bidirektionalen Verbindungen kann auch die Übertragung von Kontrollbefehlen oder Steuerbefehlen verschlüsselt werden, um wichtige Parameter wie beispielsweise Modulationsdaten zu schützen. Des Weiteren können bei einer bidirektionalen Anordnung der Sicherheitseinheiten die übertragenen Daten mit zusätzlichen Informationen, wie beispielsweise einer Datengröße, einer Datenanzahl, versehen werden. Hierdurch kann am Ende jeder Übertragung von Daten geprüft werden, ob die Daten vollständig durch die mindestens eine Datenleitung übertragen wurden, oder ob eine fehlerhafte Übertragung durchgeführt wurde.

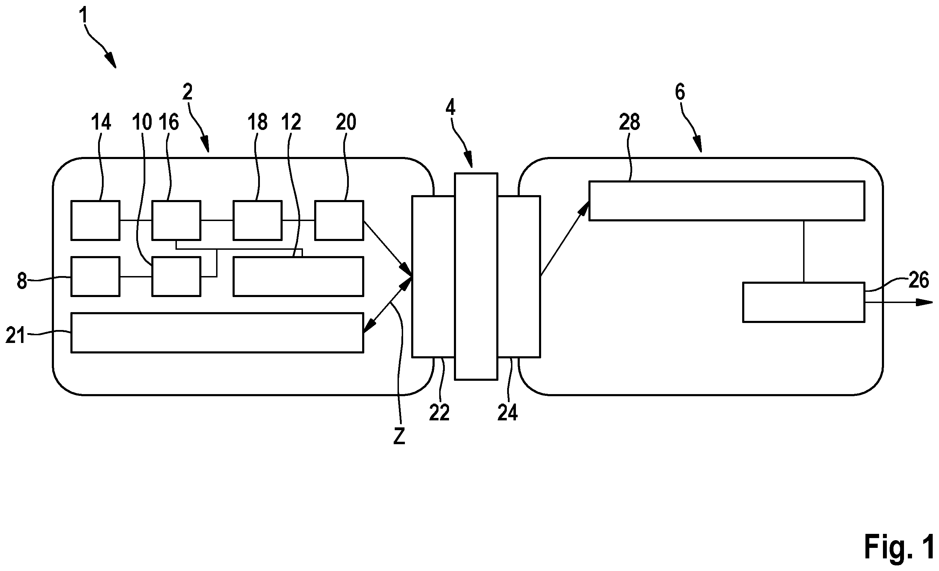

Beim erfindungsgemäßen Radarsystem weist auch der mindestens eine Radarsensorkopf mindestens eine (in Fig. 1 nicht dargestellte) Sicherheitseinheit zum Sichern von mindestens einem Datenstrom oder einem Datenpaket auf. Hierdurch werden Verarbeitungsschritte innerhalb des mindestens einen Radarsensorkopfes geschützt. Erfindungsgemäß erfolgt damit eine Übertragung der ermittelten Messdaten von dem Analog-Digital-Wandler zu der Analyseeinheit ebenfalls verschlüsselt. Es kann somit sichergestellt werden, dass der mindestens eine Radarsensorkopf nicht manipuliert ist.

Gemäß einem weiteren Ausführungsbeispiel des Radarsystems sind die digitalen Messdaten durch die mindestens eine Datenleitung an die zentrale Steuereinheit übertragbar und in der zentralen Steuereinheit durch die mindestens eine Zeitinformation synchronisierbar. Durch die erste Verarbeitung der empfangenen Messdaten im Radarsensorkopf kann auch eine Pufferung oder Verzögerung durch eine anfallende Datenmenge stattfinden. Die hieraus resultierenden Abweichungen zwischen dem mindestens einen Radarsensorkopf und der mindestens einen zentralen Steuereinheit können basierend auf der vergebenen Zeitinformation kompensiert werden. Die Zeitinformationen können vorzugsweise in Form eines Zeitstempels oder mehrere Zeitstempel realisiert sein. Somit können die Zeitstempel für eine zeitliche Synchronisation der Messdaten zwischen dem mindestens einen Radarsensorkopf der mindestens einen zentralen Steuereinheit eingesetzt werden. Hierdurch können auch verzögert an die mindestens eine zentrale Steuereinheit übertragenen Messdaten zeitlich korrekt eingeordnet und für weitere Anwendungen oder Berechnungen verwendet werden.

Nach einem weiteren Ausführungsbeispiel des Radarsystems ist die mindestens eine Zeitinformation durch eine in dem mindestens einen Radarsensorkopf angeordneten Zeit und Steuervorrichtung erzeugbar. Der mindestens eine Radarsensorkopf kann somit eine zusätzliche, parallel zu dem Analog-Digital-Wandler angeordnete, Schaltung aufweisen. Die Zeit und Steuervorrichtung kann beispielsweise über die mindestens eine Datenleitung übertragene Steuerbefehle empfangen und umsetzen und die digitalisierten Messdaten mit präzisen Zeitinformationen versehen. Des Weiteren kann die Zeit und Steuervorrichtung für eine Steuerung des mindestens einen Radarsensorkopfes sowie beispielsweise zur Überwachungssteuerung oder einer Zyklussteuerung eingesetzt werden. Damit eine zeitliche Synchronisation im Radarsystem stattfinden kann, müssen von der Zeit und Steuervorrichtung den übertragenen Messdaten beispielsweise Zeitstempel für jeden übertragenen Chirp oder jeden übertragenen Zyklus zugefügt werden, damit die mindestens eine zentrale Steuereinheit die übertragenen Messdaten sinnvoll nutzen kann.

Nach einem weiteren Ausführungsbeispiel des Radarsystems sind die durch die mindestens eine Datenleitung übertragenen Daten mit einer höheren Datenrate übertragbar als einer Referenzfrequenz eines Frequenzsynthesizers des mindestens einen Radarsensorkopfes. Damit die Zeit und Steuervorrichtung zum Steuern oder Regeln des mindestens einen Radarsensorkopfes optimal betrieben werden kann, muss die Übertragung der Daten durch die mindestens eine Datenleitung mit einer höheren Zeitauflösung erfolgen als der Radarbetrieb. Hierdurch können weitere Funktionen, wie beispielsweise Sicherheitsfunktionen zum Überwachen von Frequenz-abweichungen unterschiedlicher Oszillatoren des Frequenzsynthesizers, in das erfindungsgemäße Radarsystem integriert werden. Die höhere Zeitauflösung für die Datenübertragung kann im Rahmen von einer MMIC-Technologie technisch einfach realisiert werden, da die Technologie Frequenzen von mehreren Gigahertz ermöglicht. Somit kann ein Zeitstempel beispielsweise mit 1GHz und einer zeitlichen Auflösung von 1ns problemlos übertragen werden. Die interne Referenzfrequenz kann beispielsweise 50 MHz für eine PLL-Referenz der mindestens einen Sendeantenne betragen, wodurch die Datenrate gemäß dem Beispiel höher als 50 Mbit/s sein muss.

Gemäß einem weiteren Ausführungsbeispiel des Radarsystems weist die mindestens eine zentrale Steuereinheit mindestens einen Prozessor zum Verarbeiten von empfangenen Daten und mindestens einen Speicher zum zumindest zeitweisen Speichern von Daten auf. Hierdurch kann die mindestens eine zentrale Steuereinheit die durch die mindestens eine Datenleitung übertragenen Messdaten von mindestens einem Radarsensorkopf zumindest zeitweisen Speichern und gemäß Anforderung der jeweiligen Anwendung verarbeiten, weiterleiten oder ausgeben. Die mindestens eine zentrale Steuereinheit kann bei Bedarf durch eine leistungsfähigere Steuereinheit getauscht werden. Da hier bereits Mikroprozessortechnologie verwendet wird, können anspruchsvolle Algorithmen zum Verarbeiten der Messdaten eingesetzt und somit genauere Berechnungsergebnisse erzielt werden.

Im Folgenden wird anhand von einer stark vereinfachten schematischen Darstellung ein bevorzugtes Ausführungsbeispiel der Erfindung näher erläutert.

Die Figur 1 zeigt eine schematische Darstellung eines Radarsystems 1 gemäß einer ersten Ausführungsform der Erfindung. Das Radarsystem 1 besteht hierbei aus einem Radarsensorkopf 2, welcher über eine Datenleitung 4 mit einer zentralen Steuereinheit 6 gekoppelt ist.

Der Radarsensorkopf 2 weist mindestens eine Sendeantenne 8 auf, welche über eine Antennensteuerung 10 betreibbar ist. Die Antennensteuerung 10 ist mit einem Frequenzsynthesizer 12 zum Erzeugen einer Trägerfrequenz der Radarwellen verbunden.

Des Weiteren ist mindestens eine Empfangsantenne 14 mit einer entsprechenden Auswerteeinheit 16 zum Empfangen von Radarwellen im Radarsensorkopf 2 angeordnet. Die empfangenen Radarwellen können von einem Analog-Digital-Wandler 18 in digitale Messdaten umgewandelt werden und anschließend von einer Analyseeinheit 20 im Radarsensorkopf 2 in einem ersten Verarbeitungs-schritt transformiert werden.

Nach dem ersten Verarbeitungsschritt werden die Messdaten durch eine erste Sicherheitseinheit 22 verschlüsselt und anschließend durch die Datenleitung 4 an die zentrale Steuereinheit 6 übertragen. Am Ende der Datenleitung 4 ist eine weitere Sicherheitseinheit 24 angeordnet. Somit können die übertragenen Messdaten nach der Übertragung von der zweiten Sicherheitseinheit 24 dekodiert bzw. entschlüsselt werden. In umgekehrter Reihenfolge können Steuerbefehle ST von der zentralen Steuereinheit 6 an eine Zeit und Steuervorrichtung 21 des Radarsensorkopfes 2 gesendet werden, wobei die zweite Sicherheitseinheit 24 die Steuerbefehle ST bzw. Daten verschlüsseln und die erste Sicherheitseinheit 22 die übertragenen Steuerbefehle ST oder Daten entschlüsseln kann.

Den übertragenen digitalen Messdaten wird durch eine im Radarsensorkopf 2 angeordnete Zeit und Steuervorrichtung 21 ein Zeitstempel Z zugeordnet und ebenfalls an die zentrale Steuereinheit 6 übertragen. Dieser Schritt erfolgt noch vor einer Verschlüsselung durch die erste Sicherheitseinheit 22.

Die zentrale Steuereinheit 6 kann die übertragenen digitalen Messdaten empfangen und weiterverarbeiten. Durch die mit den Messdaten übertragenen Zeitstempel Z können diese zeitlich präzise eingeordnet werden.

Die zentrale Steuereinheit 6 weist mindestens einen Prozessor 26 zum Verarbeiten von empfangenen Daten und mindestens einen Speicher 28 zum zumindest zeitweisen Speichern von empfangenen digitalen Messdaten auf.

## Patentansprüche

1. Radarsystem (1) für ein Fahrzeug, aufweisend mindestens eine zentrale Steuereinheit (6) zum Senden von Daten und zum Verarbeiten von empfangenen Daten, mindestens einen von der mindestens einen zentralen Steuereinheit (6) beabstandeten Radarsensorkopf (2) mit mindestens einer Sendeantenne (8) zum Erzeugen und mindestens einer Empfangsantenne (14) zum Empfangen von Radarwellen und aufweisend mindestens eine Datenleitung (4) zwischen der mindestens einen zentralen Steuereinheit (6) und dem mindestens einen Radarsensorkopf (2), **dadurch gekennzeichnet, dass** die mindestens eine Datenleitung mindestens eine Sicherheitseinheit (22, 24) zum Verschlüsseln, Entschlüsseln und/oder Signieren von Messdaten oder von Steuerbefehlen (ST) aufweist, wobei die von der mindestens einen Empfangsantenne (8) des mindestens einen Radarsensorkopfes (2) empfangenen Radarwellen durch einen Analog-Digital-Wandler (18) in digitale Messdaten gewandelt werden und mit mindestens einer Zeitinformation (Z) markiert werden, wobei der mindestens eine Radarsensorkopf (2) eine dem Analog-Digital-Wandler (18) nachgeschaltete und der mindestens einen Datenleitung (4) vorgeschaltete Analyseeinheit (20) zum Durchführen einer schnellen Fourier-Transformation aufweist, und wobei der mindestens eine Radarsensorkopf (2) ebenfalls mindestens eine Sicherheitseinheit zum Sichern von mindestens einem Datenstrom oder einem Datenpaket zum Schützen von Verarbeitungsschritten innerhalb des mindestens einen Radarsensorkopfes aufweist, womit eine Übertragung der ermittelten Messdaten von dem Analog-Digital-Wandler (18) zu der Analyseeinheit (20) ebenfalls verschlüsselt erfolgt.

2. Radarsystem nach Anspruch 1, wobei zum Verschlüsseln und/oder Entschlüsseln von Messdaten oder Steuerbefehlen (ST) eine Blockverschlüsselung oder Blockentschlüsselung durch die mindestens eine Sicherheitseinheit (22, 24) ausführbar ist.

3. Radarsystem nach Anspruch 1 oder 2, wobei die mindestens eine Datenleitung (4) zwei endseitig angeordnete Sicherheitseinheiten (22, 24) aufweist.

4. Radarsystem nach einem der Ansprüche 1 bis 3, wobei die Messdaten durch die mindestens eine Datenleitung (4) an die mindestens eine zentrale Steuereinheit (6) übertragbar sind und in der mindestens einen zentralen Steuereinheit (6) durch die mindestens eine Zeitinformation (Z) synchronisierbar sind.

5. Radarsystem nach einem der Ansprüche 1 bis 4, wobei die mindestens eine Zeitinformation (Z) durch eine in dem mindestens einen Radarsensorkopf (2) angeordneten Zeit und Steuervorrichtung (20) erzeugbar ist.

6. Radarsystem nach einem der Ansprüche 1 bis 5, wobei die durch die mindestens eine Datenleitung (4) übertragenen Daten mit einer höheren Datenrate übertragbar sind als einer Referenzfrequenz eines Frequenzsynthesizers (12) des mindestens einen Radarsensorkopfes (2).

7. Radarsystem nach einem der Ansprüche 1 bis 6, wobei die mindestens eine zentrale Steuereinheit (6) mindestens einen Prozessor (26) zum Verarbeiten von empfangenen Daten und mindestens einen Speicher (28) zum zumindest zeitweisen Speichern von Daten aufweist.

## Claims

1. Radar system (1) for a vehicle, comprising at least one central control unit (6) for transmitting data and for processing received data, at least one radar sensor head (2), which is spaced apart from the at least one central control unit (6) and has at least one transmitting antenna (8) for generating and at least one receiving antenna (14) for receiving radar waves, and comprising at least one data line (4) between the at least one central control unit (6) and the at least one radar sensor head (2), **characterized in that** the at least one data line comprises at least one security unit (22, 24) for encrypting, decrypting and/or signing measurement data or control commands (ST), and the radar waves received by the at least one receiving antenna (8) of the at least one radar sensor head (2) are converted into digital measurement data by an analogue-to-digital converter (18) and are marked with at least one piece of time information (Z), the at least one radar sensor head (2) comprises an analysis unit (20), connected downstream of the analogue-to-digital converter (18) and upstream of the at least one data line (4), for carrying out a fast Fourier transformation, and the at least one radar sensor head (2) likewise comprises at least one security unit for securing at least one data stream or a data packet for protecting processing steps within the at least one radar sensor head, which is used to transmit the determined measurement data from the analogue-to-digital converter (18) to the analysis unit (20) likewise in encrypted form.

2. Radar system according to Claim 1, block encryption or block decryption being able to be carried out by the at least one security unit (22, 24) in order to encrypt and/or decrypt measurement data or control commands (ST).

3. Radar system according to Claim 1 or 2, the at least one data line (4) comprising two security units (22, 24) arranged at the ends.

4. Radar system according to one of Claims 1 to 3, the measurement data being able to be transmitted to the at least one central control unit (6) by the at least one data line (4) and being able to be synchronized by the at least one piece of time information (Z) in the at least one central control unit (6).

5. Radar system according to one of Claims 1 to 4, the at least one piece of time information (Z) being able to be generated by a time and control device (20) arranged in the at least one radar sensor head (2).

6. Radar system according to one of Claims 1 to 5, the data transmitted by the at least one data line (4) being able to be transmitted at a higher data rate than a reference frequency of a frequency synthesizer (12) of the at least one radar sensor head (2).

7. Radar system according to one of Claims 1 to 6, the at least one central control unit (6) comprising at least one processor (26) for processing received data and at least one memory (28) for at least temporarily storing data.

## Revendications

1. Système radar (1) pour un véhicule, présentant au moins une unité de commande centrale (6) pour l'émission de données et pour le traitement de données reçues, au moins une tête de capteur radar (2) espacée de l'au moins une unité de commande centrale (6) et comportant au moins une antenne d'émission (8) destinée à produire des ondes radar et au moins une antenne de réception (14) destinée à recevoir des ondes radar, et présentant au moins une ligne de données (4) entre l'au moins une unité de commande centrale (6) et l'au moins une tête de capteur radar (2), **caractérisé en ce que** l'au moins une ligne de données présente au moins une unité de sécurité (22, 24) destinée à chiffrer, déchiffrer et/ou signer des données de mesure ou des instructions de commande (ST), les ondes radar reçues par l'au moins une antenne de réception (8) de l'au moins une tête de capteur radar (2) étant converties en données de mesure numériques par un convertisseur analogique-numérique (18) et marquées par au moins une information temporelle (Z), l'au moins une tête de capteur radar (2) comportant une unité d'analyse (20) connectée en aval du convertisseur analogique-numérique (18) et en amont de l'au moins une ligne de données (4) pour effectuer une transformation de Fourier rapide, et l'au moins une tête de capteur radar (2) comportant également à l'intérieur de l'au moins une tête de capteur radar au moins une unité de sécurité destinée à sécuriser au moins un flux de données ou un paquet de données afin de protéger les étapes de traitement, ce qui permet également une transmission chiffrée des données de mesure déterminées du convertisseur analogique-numérique (18) vers l'unité d'analyse (20).

2. Système radar selon la revendication 1, dans lequel un chiffrement par blocs ou un déchiffrement par blocs peut être effectué par l'au moins une unité de sécurité (22, 24) pour le chiffrement et/ou le déchiffrement de données de mesure ou d'instructions de commande (ST).

3. Système radar selon la revendication 1 ou 2, dans lequel l'au moins une ligne de données (4) comporte deux unités de sécurité (22, 24) agencées aux extrémités.

4. Système radar selon l'une quelconque des revendications 1 à 3, dans lequel les données de mesure peuvent être transmises à l'au moins une unité de commande centrale (6) par l'au moins une ligne de données (4) et peuvent être synchronisées dans l'au moins une unité de commande centrale (6) par l'au moins une information temporelle (Z).

5. Système radar selon l'une quelconque des revendications 1 à 4, dans lequel l'au moins une information temporelle (Z) peut être générée par un dispositif de temps et de commande (20) agencé dans l'au moins une tête de capteur radar (2).

6. Système radar selon l'une quelconque des revendications 1 à 5, dans lequel les données transmises par l'au moins une ligne de données (4) peuvent être transmises avec un débit de données plus élevé qu'une fréquence de référence d'un synthétiseur de fréquence (12) de l'au moins une tête de capteur radar (2).

7. Système radar selon l'une quelconque des revendications 1 à 6, dans lequel l'au moins une unité de commande centrale (6) comporte au moins un processeur (26) pour le traitement des données reçues et au moins une mémoire (28) pour le stockage, au moins temporaire, des données.
